# EUROPEAN PATENT APPLICATION

(11) **EP 2 741 023 A1**
(43) Date of publication of application: **11.06.2014**
(21) Application number: 13196387.8
(22) Date of filing: 10.12.2013
(51) Int. Cl.: F24J 2/06, F24J 2/07, F24J 2/46, F24J 2/48, F24J 2/50

(54) **Device for capturing, transferring and converting solar energy for a system for generating electricity, hydrogen and oxygen**

(30) Priority: 10.12.2012 IT MI20122098
(71) Applicant: Melosi, Mario, 27100 Pavia (IT)
(72) Inventor: Melosi, Mario, 27100 Pavia (IT)
(74) Representative: Girlando, Mario

(57) **Abstract**

Device for capturing and transferring and converting solar energy for a system for generating electricity constituted by passing concentrated light through a quartz glass arranged at the inlet of a pressure equipment containing black bodies that absorb the solar radiation, heat that becomes kinetic energy of the gas circulating thereon. The gas goes to the turbine, the compressor and the alternator that produces electricity are fitted together, and exits providing heat for the endothermic electrochemical production of hydrogen and oxygen as well as for the auxiliary services.

## Description

### Field of the invention

The present invention relates to a device for capturing, transferring and converting solar energy for a system for generating electricity from solar energy, electricity and stored heat for local use, electricity and thermal energy converted into hydrogen and oxygen at high pressure, 24-hour a day operation.

### Background of the invention

The prior art teaches us to convert solar energy into electricity through a low yield photovoltaic conversion or through a prior transformation into heat and thus into medium yield electricity through thermodynamic cycles and rotating electrical generators.

Photovoltaic conversion entails high costs, not only in terms of installation of the systems which sunlit surface is several times greater with respect to higher yield systems in terms of the electricity produced, but also in terms of panel disposal. Thermodynamic conversion guarantees extended plant operating times and lower installation and dismantling costs

Some thermodynamic solar systems provide for the use of carrier fluids having a high thermal capacity, constituted by mixture of molten salts for example. These carrier fluids are typically used for Rankine cycles in organic vapour turbines.

In another technology, the heat is captured by reflecting parabolas in which concentrated flux it is directly employed to activate Stirling cycles.

Another technique, as regards the capture of solar energy, shows devices comprising two parabolas, a primary reflector and a secondary reflector facing and co-focal with respect to the first. These devices comprise a manifold, i.e. a conduit in which the light radiation is conveyed by the secondary reflector. One example of such devices is provided in JP2003240356 (A).

JP8200839 (A) also shows a similar device, which collector terminates with a heat exchanger immersed in water.

### Summary of the invention

The aim of the present invention is to provide a perifocal capable of ennobling, at high yield in terms of electricity and service heat, the solar heat from atmospheric pressure to the operating pressure of the device for transforming into electrical energy and residual heat and to overcome the drawbacks of the prior art.

This aim is achieved by a concentrated solar light beam perifocal constituted by a quartz glass as Roman arch, i.e. semi-circular arch, crossed by the light and which divides the atmospheric gas and the gas flowing under pressure in a device where heat is exchanged between the flowing inert gas and the black material that absorbs the radiation heat which is transferred into the kinetic energy of the gaseous carrier.

The perifocal comprises a dome-shaped quartz glass arranged on the pressurised gas side so that the mechanical strain is tangentially released onto the semi-spherical surface, translating into compression acting forces for which the material is suitable, having a compressive strength equivalent to that of a steel.

The perifocal further comprises black material, which absorbs the radiation heat from the concentrated solar light beam, and which is specifically, but not exclusively, constituted by silicon carbide granules or articles and resin-free graphite raschig rings.

The perifocal further comprises a flowing gaseous carrier which exchanges heat with the black material thus acquiring the equivalent kinetic energy by increasing its temperature.

The object of the present invention is a device for capturing, transferring and converting solar energy into kinetic energy of a gas for a system for generating electricity from solar energy,

According to one preferred variant of the present invention, the solar radiation is optically conveyed into an externally insulated and internally shiny metal conduit. The conduit further comprises a transparent lens 14 which closes the portion at atmospheric pressure.

The present invention further relates to an apparatus for capturing solar energy comprising a pointing system towards the sun. This system comprises a first and a second parabolic mirror. The first mirror directly faces the sun, while the second mirror is opposite thereto and faces the first mirror. The said mirrors have the same focus, so as to produce a beam of concentrated light in a central area of the first mirror. The first mirror has a window in the central area. The apparatus further comprises a piano-convex lens located behind the first mirror and facing the window so as to concentrate the light beam exiting from the window.

### Detailed description

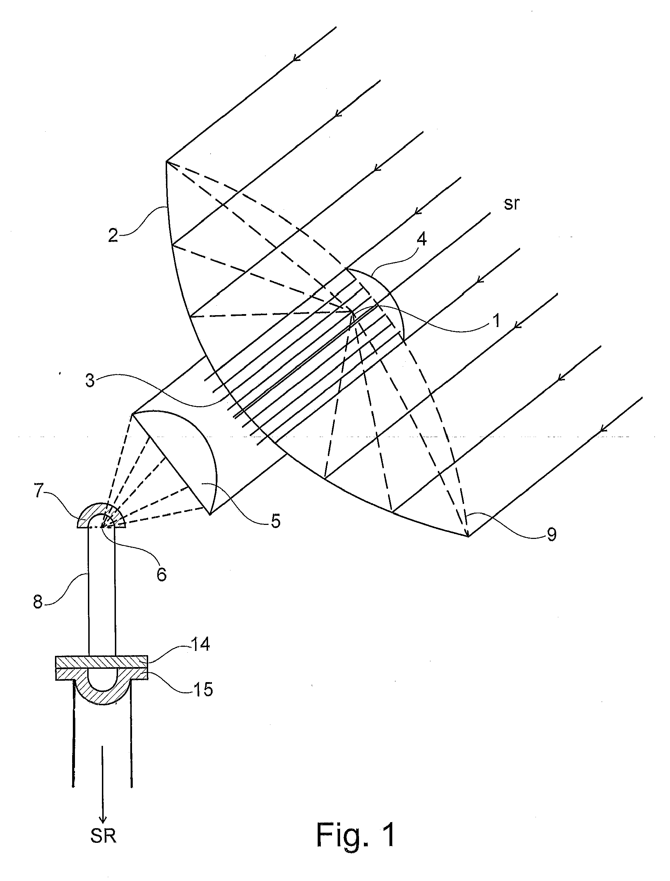

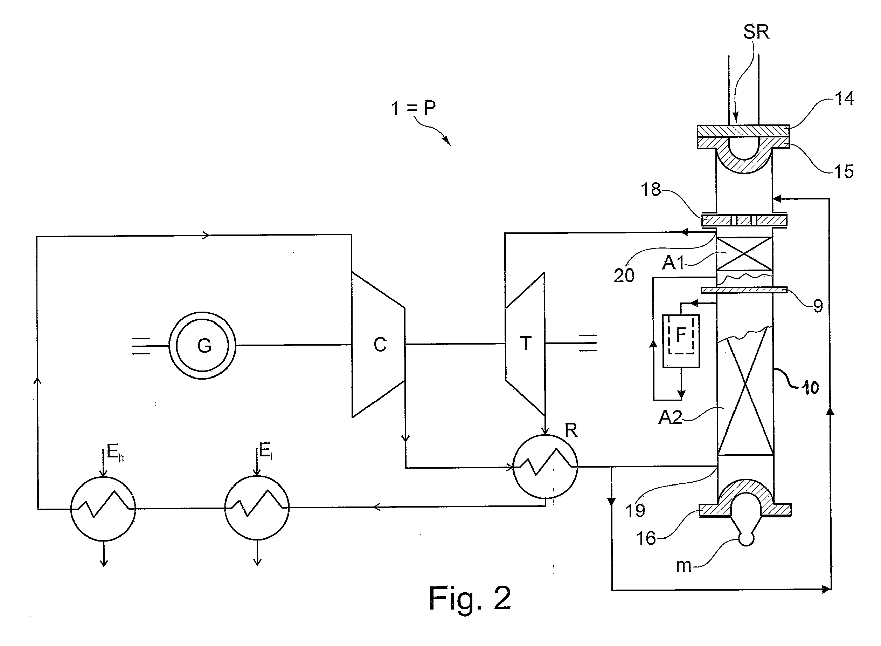

The device is constituted of two parts, the first for capturing and transferring solar energy Fig. 1 and the second for converting into electricity and heat Fig. 2. The schematic drawings are out of scale and the insulations are not indicated.

Fig.1: a light collector apparatus comprises a pair of reflecting and parabolic mirrors. The first mirror 2 has large dimensions and faces the sun to receive the rays (identified by "sr" in figure 1). The second mirror 4 has smaller dimensions and is provided with arches 9 that face the first mirror 2.

A window 3 for the passage of light originating from the focus 1, common to the two parabolas, is arranged in the central part of the parabolic mirror 2.

The light flux crosses the plano-convex lens 5 that implements the second concentration in the focus 6 flowing on the, preferably hollow hemispherical, optical body 7. This optical body 7 is made of quartz.

The element thus described performs the pointing that follows the Sun in its movement in the sky, and rotates with respect to the centre of the hemispherical body which is also the focus 6.

The light, collimated in the spherical body, is then directed to the collector pipe 8. This collector pipe 8 is internally reflective, and is closed by the flat quartz lens 14. Given the high temperatures reached in the tube 8 at atmospheric pressure, inert gas or nitrogen gas is injected so as to remove the air from the walls of the conduit and inhibit oxidation of the material while protecting the shine.

The light from the environment at atmospheric pressure, (schematically shown with the "SR" rays in the accompanying drawings), continues crossing the quartz dome 15.

This first part of the light concentration device can be produced with current parabolic technologies or with an optical or other system.

Fig. 2 shows a schematic view of the system for generating electricity and heat having the capturing and transferring device according to Fig. 1.

This lens 15 is capable of withstanding high temperatures and a difference in pressure between the two parts of the device. The light radiation can thus be advantageously used to directly heat a pressurised carrier fluid.

It comprises a clear dome of quartz glass with semi-circular arch 15 of suitable thickness for the operating pressure of the gaseous stream circulating in the second part of the device.

With particular reference to figure 2, an upstream capture device 1 comprises
- a reflector, generally but not exclusively a paraboloid,
- a transmission conduit of the concentrated solar radiation reflected by the reflector having an inlet facing the reflector to collect the solar radiation,
- a piano-convex lens 5, which performs the second concentration of the light toward the optical collimation body 7, constituted by a hollow sphere or, alternatively, of a piano-convex lens, placed at the entrance to the conduit 8.
- a transparent lens 14,15 arranged transversely to the axis of the conduit downstream of said inlet and that divides the conduit 8 into a first and a second portion; the lens 14, 15 preferably has a first transparent flat element 14 and a second element 15 arranged beneath the first element 14, that is dome-shaped with semi-circular arch;
- in the pressurised portion of the column 10 there can optionally be present a transparent lens 18 that is perforated and adapted to create a cushion of gas fed by a small flow of hot gas,

The part, downstream of said lenses 14-15, is pressurised. The absorption means A1 and A2 of the solar radiation are housed in this pressurised part.

The outlet 20 of the internally shiny metal column is arranged downstream of said lenses 14-15 and upstream of the absorption means. An inlet 19 for a gaseous carrier fluid V is arranged further down with respect to this outlet 20.

At the inlet 19 the lower part of the column 10 is closed by means of a further lens 16 that is similar and opposite to the lens 15. This further lens 16, jointly with the peep-hole "m", allows absorption of the solar radiation to be visually monitored. The inlet 19 and outlet 20 delimit a pressure circuit wherein the carrier fluid V in gaseous phase circulates. This carrier fluid V is preferably nitrogen or a mixture of inert gases. The apparatus 10 can be designed upside down to allow entry of the concentrated light from below, depending on the assembly arrangements of the various parts.

The lenses 15 and 16 are thus capable of being crossed by the radiation light without collapsing under the difference in pressure between the column and the outside. These lenses are constituted of quartz glass which is resistant to thermal shock and whose compressive strength is equivalent to that of steel.

The chamber delimited by the lens 15 and by the perforated lens 18 creates a volume cushion that is fed by a small flow of the carrier gas V.

The present device finds particular application in systems for generating electricity from solar energy.

The heat absorption means are primarily black bodies that are adequately arranged in the column for a suitable development of heat from the absorbed radiation, heat that is then transmitted to the carrier fluid V.

The carrier fluid circulating between the inlet 19 and the outlet 20 is heated by these absorption means A of the solar radiation SR.

The layer A1 is for example constituted by black granules and/or manufactured black silicon carbide rings having high heat resistance and the layer A2 by black, resin-free graphite raschig rings, with interposition of the quartz glass 9 and the dust filter F.

The characteristics of the quartz dome and the volume of the absorbers are proportionate to the acquisition of heat at a higher temperature than the light flux and hence to the power generated by the device P known as the "perifocal", since it identifies its constituent parts around the focus of the paraboloid.

According to a preferred application of the present invention, an electricity generation system comprises a closed cycle plant.

The carrier fluid V heated by means of the above-mentioned absorption means A1, A2 in the pressurised parts is conveyed in succession through:
- a turbine T
- a recuperator R that recuperates the heat from the output fluid from the turbine to preheat the amount of inlet fluid to the device P,
- one or more heat exchangers E (Ei, Eh) for industrial and residential use,
- a compressor C that is axially connected with the turbine T

The turbine is operatively connected to an electric generator G.

In relation to the characteristics of the absorption means, it may be necessary to filter the carrier fluid so as to eliminate any dust that has been dragged away from the surfaces of the absorption means:

The high-pressure portion of the column can therefore be further subdivided by means of additional lenses 9 and filters in relation to the characteristics of the absorption bodies A and remove the dust from the gas circulating and entering the turbine T.

According to a preferred application of the system which is also the object of the present invention, the heat exchanger/s E can for example provide for the heating of a liquid such as water for example, both for industrial uses Ei and for domestic and residential uses Eh.

According to another preferred application of the present invention, the heat is stored by means of the above-mentioned exchangers E in an electrolyte liquid, e.g. an alkaline solution for the thermo-electrolysis process of water, and then used to provide heat to an electrolytic cell of the electrochemical thermodynamo described in patent EP1711972.

According to a preferred operation of the electricity generation system, the excess electricity produced during the day can be used to produce hydrogen and oxygen, at high pressure, as shown in said patent by determining the storage of energy in chemical form, gases also available on-site with which to charge electric cars. During the night, these gases can be combusted to produce electricity, thus obtaining a complete energy autonomy in the territory 24 hours on 24, in those places where the general electricity network does not exist.

Advantageously, rather than being dispersed into the environment, the thermal energy obtained from the heat exchanger is advantageously stored and used to produce the gases, particularly during the night when peak consumption is lower and electricity is available from the network and is less expensive, and the combustion agents (H2, 02), at high pressure, necessary for the movement of motor vehicles and the hydrogen is thus most economical since it is produced by the two energies, electricity and heat, with a technology having high energy conversion yields.

In addition, countless local electric control units can manage the systems and supply the network, during the day, with electricity reproducible from the chemical energy stored and cope with the high peaks in electricity consumption, thus providing a function analogous to Hydroelectric Power Plants.

The generation scheme shown herein, has an electrical efficiency greater than 40% and an overall energy efficiency greater than 85%, counting heat dispersion losses, machine passivity and the heat deliberately dispersed to maintain an optimal temperature of the fluid at the compressor.

The present invention also has natural application in underdeveloped countries for the production of hydrogen and oxygen, and/or electricity intended for both the automotive industry and reconverted into electricity supplied to the electricity distribution network for lighting and services, water pumps, industrial technologies, etc.

By virtue of the countless embodiments throughout the world, the present invention integrates the mega solar installations having MW power with high potential to contain the global warming of planet Earth and the pollution thereof by limiting the use of petroleum. The individual powers of numerous kW characterise the Local Solar Units.

## Claims

1. - Concentrated solar light beam perifocal consisting of a quartz glass as Roman arch, i.e. semi-circular arch, crossed by the light and which divides the atmospheric gas and the gas flowing under pressure in a device where the heat is exchanged between the flowing inert gas and the black material that absorbs the radiation heat which is transferred into the kinetic energy of the gaseous carrier.
- dome-shaped quartz glass, the dome being arranged on the pressurised gas side so that the mechanical strain is tangentially released onto the semi-spherical surface, translating into compression threshold forces for which the material is suitable, having a compressive strength equivalent to that of a steel.
- black material, which absorbs the radiation heat from the concentrated solar light beam, and which is specifically, but not exclusively, constituted by silicon carbide granules or articles and resin-free graphite raschig rings.
- a flowing gaseous carrier which exchanges heat with the black material thus acquiring the equivalent kinetic energy by increasing its temperature.

2. - Perifocal, apparatus for capturing solar energy according to claim 1, **characterised by** an insulated conduit that transfers the concentrated light beam from the focus to the equipment, being metallic and shiny on the inside and flushed by inert gas that prevents internal oxidation of the material and preserves the shine thereof.

3. - Perifocal, apparatus for capturing solar energy according to claims 1 and 2, **characterised by** a volume of the apparatus downstream of the dome and delimited by a perforated quartz glass sheet over the first layer of black material, the volume being fed by a small part of the circulating gas and which constitutes a gas pocket for protecting the dome.

4. - Perifocal, apparatus for capturing solar energy according to claims 1 to 3, **characterised by** dust removal filters of the inert circulating gas depending on the types of black materials used.

5. - Perifocal, apparatus for capturing solar energy according to claims 1 to 4, **characterised by** a lens having optical properties, thermal and mechanical resistance suitable for the function of separating the two parts of a conduit that transfers the concentrated light at atmospheric pressure and operating pressure.

6. - Perifocal, apparatus for capturing solar energy according to claims 1 to 5, **characterised in that** it comprises a set pointing towards the sun, comprising a first (2) and a second parabolic mirror (4), said first mirror (2) directly facing the sun, said second mirror (4) being opposite thereto and facing said first mirror (2), said mirrors (2, 4) having the same focus, so as to produce a beam of concentrated light in a central area of said first mirror (2); said first mirror (2) having a window (3) in said central area; said perifocal further comprising a piano-convex lens (5) located behind said first mirror (2) and facing said window (3) for concentrating a light beam in output from said window (3).

7. - Perifocal, apparatus for capturing solar energy according to claim 6, **characterised in that** it comprises a tube (8) having an inlet opening; an optical collimation body (7) disposed in the region of said inlet opening, said optical collimation body (7) receiving the concentrated light from said plano-convex lens (5), said plano-convex lens (5) having a focus coincident with the centre of said optical collimation body (7).

8. - Perifocal, apparatus for capturing solar energy according to claim 7, **characterised in that** it comprises a pointing system of said mirrors (2, 4), said pointing system having a centre of rotation coincident with the centre of said optical collimation body (7).

9. - Perifocal, apparatus for capturing solar energy according to claim 7 or 8, **characterised in that** said optical collimation body (7) has a hollow hemispherical shape or piano-convex shape for which the pointing system rotates around a centre located on the central axis thereof.
